# EUROPÄISCHE PATENTANMELDUNG

(11) **EP 1 650 102 A1**
(43) Veröffentlichungstag der Anmeldung: **26.04.2006**
(21) Anmeldenummer: 05021230.7
(22) Anmeldetag: 29.09.2005
(51) Int. Cl.: B62D 3/12, F16H 55/28

(54) **Lenkgetriebe**

(30) Priorität: 21.10.2004 DE 102004051494
(71) Anmelder: ThyssenKrupp Presta SteerTec GmbH, 40476 Düsseldorf (DE)
(72) Erfinder: Speidel, Gerd, 73650 Winterbach (DE); Matthias, Lutz, 73275 Ohmden (DE); Rombold, Manfred, 71364 Winnenden-Höfen (DE)
(74) Vertreter: LENZING GERBER

(57) **Zusammenfassung**

Die Erfindung betrifft ein Lenkgetriebe (1) für ein Kraftfahrzeug, umfassend ein Lenkgehäuse (2), eine in dem Lenkgehäuse (2) um einen Lenkweg verschiebbar geführte Zahnstange (3), ein drehbares und mit der Zahnstange (3) kämmendes Lenkritzel (4), sowie ein erstes Druckstück (5), wobei die Zahnstange (3) mittels des ersten Druckstücks (5) mit einer Kraft in Richtung des Lenkritzels (4) beaufschlagbar ist. Ein Lenkgetriebe, bei dem eine verbesserte Dämpfung der Lenkung vorliegt, wird erfindungsgemäß dadurch geschaffen, dass die Zahnstange (3) zumindest über einen Abschnitt des Lenkweges mittels eines zweiten Druckstücks (6) mit einer Kraft in Richtung des Lenkritzels (4) beaufschlagbar ist.

## Beschreibung

Die Erfindung betrifft ein Lenkgetriebe nach dem Oberbegriff des Anspruchs 1.

Es sind Lenkgetriebe für Kraftfahrzeuge bekannt, bei denen eine mit der weiteren Lenkung der Räder verbundene Zahnstange mittels eines antreibbaren Lenkritzels in ihrer Längsrichtung bewegt werden kann. Dabei ist es zur Sicherstellung der Spielfreiheit der Lenkung bekannt, die Zahnstange mittels eines Druckstücks gegen das Lenkritzel zu spannen, um so eine voilständig spielfreie Verkämmung von Zahnstange und Lenkritzel zu erreichen. Grundsätzlich führt eine solche Vorspannung der Zahnstange zur Erhöhung einer Durchschiebekraft der Zahnstange in ihrer Längsrichtung.

Moderne Fahrwerksgeometrien sind häufig so ausgelegt, dass eine während der Fahrt auf die eingeschlagenen Räder wirkende Rückstellkraft in Richtung einer Neutralstellung der Lenkung (Geradeauslauf) nur noch gering ist. Dies führt zu Problemen bei der Lenkung des Fahrzeugs, wobei insbesondere Schwingungen um die Neutralstellung herum auftreten können.

Es ist die Aufgabe der Erfindung, ein Lenkgetriebe zu schaffen, bei dem eine verbesserte Dämpfung der Lenkung vorliegt.

Diese Aufgabe wird für ein eingangs genanntes Lenkgetriebe erfindungsgemäß mit den kennzeichnenden Merkmalen des Anspruchs 1 gelöst.

Durch die zusätzliche Kraftbeaufschlagung mittels eines zweiten Druckstücks ist es vorteilhaft ermöglicht, die Durchschiebekraft der Zahnstange, welche mit den Kräften der Druckstücke korreliert ist, in gewünschter Weise zu beeinflussen. Dabei ist ein erfindungsgemäßes Lenkgetriebe sowohl für manuelle als auch für kraftunterstützte Lenkungen (Servolenkungen) einsetzbar.

Vorteilhaft greift dabei das erste Druckstück über ein erstes Stützmittel und das zweite Druckstück über ein zweites Stützmittel jeweils an der Zahnstange an. Je nach Ausbildung der Zahnstange und der Stützmittel kann dabei eine von der Stellung der Zahnstange abhängige Veränderung ihrer Durchschiebekraft auf einfache Weise erreicht werden. Bevorzugt besteht dabei das erste Stützmittel aus einem Polymer und besonders bevorzugt ist das zweite Stützmittel als metallisches, drehbares Lagermittel ausgebildet. Somit weist das erste Stützmittel eine vergleichsweise hohe Reibung mit der Zahnstange auf und das zweite Stützmittel eine vergleichsweise geringe Reibung.

Zur Erlangung einer gut einstellbaren Reibung in Verbindung mit einer Halterung der Zahnstange in zwei Raumrichtungen kann das erste Stützmittel vorteilhaft mit einer zu der Kraftrichtung des ersten Druckstücks nicht senkrechten Stützfläche der Zahnstange zusammenwirken.

Vorteilhaft weist die Zahnstange eine Ausformung auf, wobei das zweite Stützmittel in einem insbesondere einer Neutralstellung der Zahnstange zugeordneten Verschiebebereich mit der Ausformung zusammenwirkt. Auf einfache Weise kann diese Ausformung eine Vertiefung einer dem zweiten Stützmittel zugeordneten Stützfläche der Zahnstange sein. Insgesamt ist hierdurch auf einfache Weise eine Variation der Durchschiebekraft der Zahnstange in Abhängigkeit von der Position der Zahnstange ermöglicht, wobei eine mit der Neutralstellung der Zahnstange bzw. der Lenkung korrelierte erhöhte Durchschiebekraft eine Dämpfung der Lenkung in ihrer Neutralstellung vorteilhaft ermöglicht.

In bevorzugter Ausführung eines erfindungsgemäßen Lenkgetriebes ist das zweite Druckstück an dem ersten Druckstück aufgenommen. Vorteilhaft ist das erste Druckstück dabei mit einer ersten Feder gegen das Lenkgehäuse abgestützt, und das zweite Druckstück ist mit einer zweiten Feder gegen das erste Druckstück abgestützt. Hierdurch wird eine kleinbauende Anordnung der beiden Druckstücke ermöglicht. Zudem wird auf einfache Weise eine wechselweise Beeinflussung der auf die Stützmittel wirkenden Stützkräfte ermöglicht, so dass etwa in Stellungen der Zahnstange, in denen eine hohe Kraft auf das erste Stützmittel wirkt, eine entsprechend geringere Kraft auf das zweite Stützmittel wirkt und umgekehrt. Aufgrund unterschiedücher Reibungen der Stützmittel kann dann auf einfache Weise eine variable Durchschiebekraft erzielt werden, wobei die summierte Stützkraft der beiden Druckstücke, durch welche die Zahnstange in ihrer Verkämmung spielfrei gehalten wird, sich bevorzugt nicht verändert.

Weitere Vorteile und Merkmale eines erfindungsgemäßen Lenkgetriebes ergeben sich aus dem nachfolgend beschriebenen Ausführungsbeispiel sowie aus den abhängigen Ansprüchen.

Nachfolgend wird ein bevorzugtes Ausführungsbeispiel eines erfindungsgemäßen Lenkgetriebes beschrieben und anhand der anliegenden Zeichnungen näher erläutert.
- Fig. 1: zeigt eine schematische Schnittansicht eines Lenkgetriebes im Bereich von Lenkritzel und Druckstück, wobei die Bewegungsrichtung der Zahnstange senkrecht zur Zeichnungsebene verläuft.
- Fig. 2: zeigt eine um 90 Grad gedrehte Darstellung des Lenkgetriebes aus Fig. 1, wobei die Bewegungsrichtung der Zahnstange in der Zeichnungsebene liegt und wobei sich die Zahnstange In einer Neutralstellung befindet.
- Fig. 3: zeigt ein anderes Ausführungsbeispiel mit einer im Querschnitt runden Zahnstange.
- Fig. 4: zeigt ein schematisches Diagramm mit dem Verlauf der Durchschiebekraft einer Lenkung nach dem Ausführungsbeispiel.

Das Lenkgetriebe 1 umfasst ein Lenkgehäuse 2, in dem eine Zahnstange 3 in ihrer Längsrichtung um einen Lenkweg verschiebbar geführt ist. Die Enden der Zahnstange sind mit weiterem, nicht dargestellten Lenkgestänge zur Verschwenkung der vorderen Räder eines Kraftfahrzeugs verbunden.

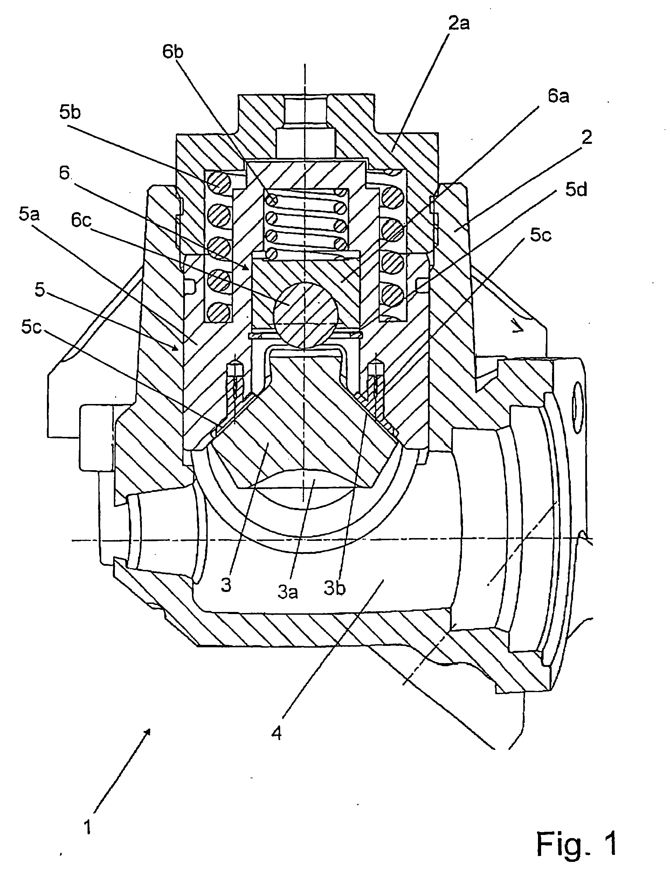

Die Zahnstange 3 weist vorliegend einen Y-förmigen Querschnitt auf (siehe Fig. 1). Im Bereich der Gabel des Y umfasst die Zahnstange 3 eine Reihe von Zähnen 3a, die mit einem im Lenkgehäuse 2 drehbar aufgenommenen Zahnrad oder Lenkritzel 4 verkämmt sind. Das Lenkritzel 4 ist durch die weiteren Lenkmittel (nicht dargestellt) des Kraftfahrzeugs antreibbar drehbar, wobei es sich sowohl um einen rein manuellen Antrieb durch eine mittels eines Lenkrades drehbare Welle als auch um einen motorischen oder hydraulischen Antrieb handeln kann. Das beschriebene Lenkgetriebe ist somit sowohl für Servolenkungen als auch für nicht kraftunterstützte Lenkungen einsetzbar.

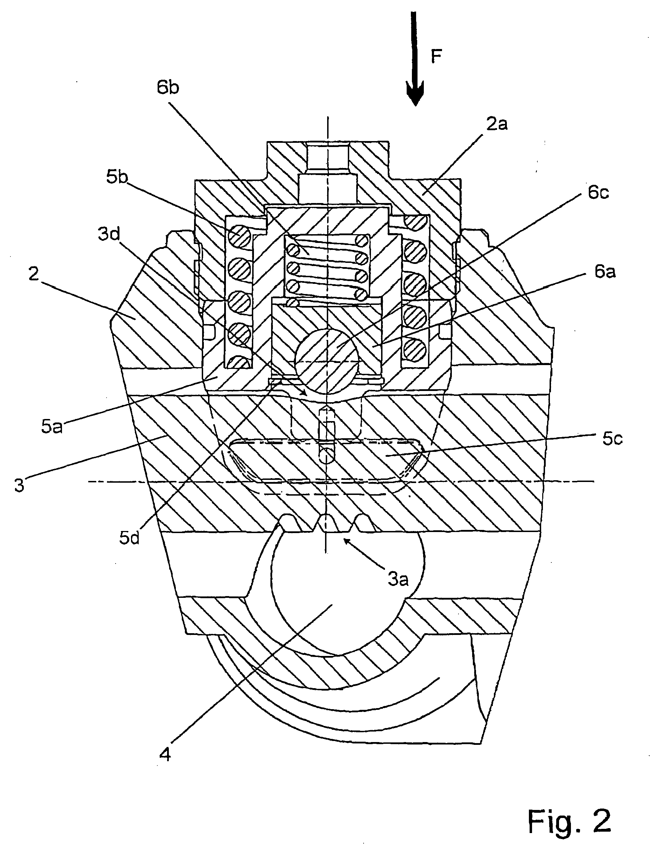

Die Lagerung und/oder die Flexibilität der Zahnstange ist so beschaffen, dass sie in zu ihrer Längsrichtung und zur Drehachse des Lenkritzels senkrechter Richtung (nachfolgend als Normalrichtung bezeichnet) ein ausreichendes Spiel aufweist, um eine spielfreie Verkämmung mit dem Lenkritzel zu ermöglichen. Zur Gewährleistung der Spielfreiheit ist die Zahnstange in ihrer Normalrichtung mit einer Stützkraft F kraftbeaufschlagt (siehe Fig. 2).

Die Stützkraft F wird mittels eines ersten Druckstücks 5 und eines zweiten Druckstücks 6 auf die der Verkämmung gegenüberliegende Seite der Zahnstange 3 ausgeübt.

Das erste Druckstück 5 umfasst einen Druckstückkörper 5a, der in der Normalrichtung beweglich in einer korrespondierenden Ausnehmung des Lenkgehäuses 2 aufgenommen ist. Eine erste Feder 5b, die als Spiralfeder ausgebildet ist, stützt den Druckstückkörper 5a gegen ein mit dem Lenkgehäuse 2 fest verbundenes Schlussstück 2a ab. An seinem der Zahnstange 3 zugewandtem Ende ist der Druckstückkörper 5a mit zwei gegen die Normalrichtung jeweils um etwa 45 Grad geneigten Flanken versehen, auf denen ein erstes Stützmittel 5c angebracht ist. Das erste Stützmittel 5c umfasst für jede der beiden Flanken einen aus einem elastischen Polymer bestehenden Stützbelag. Jeder der Stützbeläge greift an einer jeweiligen ersten Stützfläche 3b an, die sich jeweils auf den beiden der Verzahnung gegenüberliegenden Schenkelflächen der Y-förmigen Zahnstange befindet. Aufgrund der gegeneinander gerichteten Neigung der Stützflächen von etwa 45 Grad heben sich die gegeneinander gerichteten Komponenten der ersten Stützkraft auf, und die resultierende Kraft der ersten Stützmittel 5c verläuft ausschließlich in Normalrichtung. Hierdurch wird eine zusätzliche Zentrierung der Zahnstange 3 in zu der Normalrichtung senkrechter Richtung erreicht.

In einem zwischen den beiden ersten Stützflächen verbleibenden zentralen Bereich des ersten Druckstücks 5 ist eine sacklochartige Ausnehmung in dem Druckstückkörper 5a vorgesehen, in welcher ein zweites Druckstück 6 aufgenommen ist.

Das zweite Druckstück 6 umfasst einen zweiten Druckstückkörper 6a, der in der Ausnehmung des ersten Druckstückkörpers in Normalrichtung beweglich geführt und mittels einer zweiten Feder 6b gegen einen Boden des ersten Druckstückkörpers 5a abgestützt ist, Die zweite Feder 6b ist wie die erste Feder 5b als Schraubenfeder ausgebildet.

Der Verschiebeweg des zweiten Druckstücks in Richtung der Zahnstange 3 ist mittels eines an dem ersten Druckstückkörper 5a aufgenommenen Anschlagring 5d begrenzt. Der Anschlagring 5d weist eine ausreichende Öffnung zum Durchgriff eines an dem zweiten Druckstückkörper aufgenommenen zweiten Stützmittels 6c auf. Das zweite Stützmittel 6c ist in den Zeichnungen als Lagerkugel dargestellt, die in einer halbkugeligen Ausnehmung des ersten Druckstückkörpers 5a geführt ist. Es kann sich jedoch auch um eine drehbar gelagerte Rolle handeln oder um ein anderes an sich bekanntes, reibungsarmes Stützmittel. Das zweite Stützmittel 6c rollt auf einer zweiten Stützfläche 3c der Zahnstange 3, die einer Stirnfläche des zentralen Stamms der Y-förmigen Zahnstange entspricht. Die durch das zweite Stützmittel 6c auf die Zahnstange übertragenen Kräfte wirken vorliegend ausschließlich in Normalrichtung.

Wie insbesondere Fig. 2 zeigt, weist die zweite Stützfläche 3c der Zahnstange 3 eine Vertiefung 3d auf, in die das zweite Stützmittel bzw. die Lagerkugel 6c in der Stellung der Zahnstange 3 gemäß Fig. 2 eingreift. Diese Stellung der Zahnstange ist der Neutralstellung der Lenkung (Geradeauslauf) zugeordnet.

### Die Erfindung funktioniert nun wie folgt:

Die gesamte Kraft F, die durch die Druckstücke 5, 6 auf die Zahnstange 3 in Normalrichtung ausgeübt wird, setzt sich aus einer Teilkraft F1 des ersten Druckstücks 5 und einer Teilkraft F2 des zweiten Druckstücks 6 zusammen. Dabei wird die Teilkraft F1 durch das erste Stützmittel 5c und die Teilkraft F2 durch das zweite Stützmittel 6c übertragen. Aufgrund der unterschiedlichen Auslegung der Stützmittel 5c, 6c zum einen als Polymer und zum anderen als metallische Lagerkugel oder Lagerrolle ergeben sich deutlich unterschiedliche Reibungskräfte, die einer Bewegung der Zahnstange 3 in Ihrer Längsrichtung entgegengesetzt sind. Zumindest die Reibungskräfte der ersten Stützmittel 5c (Polymer) sind dabei wesentliche Beiträge zur gesamten Durchschiebekraft der Zahnstange 3 in ihrer Längsrichtung.

In der Neutralstellung der Lenkung gemäß Fig. 2 greift die Lagerkugel 6c in die Vertiefung 3d der Zahnstange 3 ein, so dass der zweite Druckstückkörper 6a an dem Anschlag 5d anliegt. In dieser Stellung der Zahnstange wird daher keine resultierende Kraft durch das zweite Druckstück 6 auf das erste Druckstück 5 ausgeübt, und es wird auch keine Stützkraft durch das zweite Stützmittel 6c auf die Zahnstange 3 ausgeübt. Die gesamte Stützkraft F entspricht somit der Teilkraft F1, welche durch die erste Feder 5b über die ersten Stützmittel 5c auf die ersten Stützflächen 3b ausgeübt wird. Aufgrund der Beschaffenheit der ersten Stützmittel 5c liegt daher eine maximale Durchschiebekraft der Zahnstange 3 in ihrer Längsrichtung vor.

Bei Bewegung der Zahnstange aus ihrer Neutralstellung heraus fluchten Vertiefung 3d und zweites Stützmittel 6c nicht mehr, und das zweite Stützmittel 6c wird aus seinem Anschlag 5d heraus entgegen der zweiten Feder 6b gedrückt. Hierdurch wird wegen der Aufnahme des zweiten Druckstücks 6 in dem ersten Druckstück 5 auch eine Gegenkraft auf die erste Feder 5b ausgeübt, welche alleinig die auf die ersten Stützmittel 5c-wirkende erste Teilkraft F1 bestimmt. Die Teilkraft F1 wird daher verringert, wobei zugleich die zweite Teilkraft F2 des zweiten Stützmittels nunmehr von Null verschieden ist. Die Gesamtstützkraft F = F1 + F2 ist vorliegend konstant, da sich für die erste Feder 5b keine Veränderung ihrer Auslenkung ergibt.

Hinsichtlich der Durchschiebekraft für die Zahnstange 3 ergibt sich dagegen eine deutliche Änderung aufgrund der stark unterschiedlichen Reibungskoeffizienten von erstem Stützmittel 5c und zweitem Stützmittel 6c. Das zweite Stützmittel 6c weist aufgrund der Auslegung einer rollenden Lagerung von Metall auf Metall einen sehr niedrigen Reibungskoeffizienten auf, so dass die Durchschiebekraft bei Auslenkung der Zahnstange 3 aus ihrer Neutralstellung abnimmt. Eine auf das zweite Stützmittel 6c einwirkende Axialkraft vermindert also die auf das erste Stützmittel 5c wirkende Axialkraft um deren Betrag und verringert entsprechend die Reibung zwischen dem Stützmittel 5c und der Zahnstange und somit die Durchschiebekraft. Je nach Auslegung der Flanken der Vertiefung 3d kann diese Abnahme der Durchschiebekraft mehr oder weniger kontinuierlich gestaltet sein. Durch geeignete Auslegung der Federn 5b, 6b und somit der Teilkräfte F1 und F2 kann die Veränderung der Durchschiebekraft vorbestimmt werden.

Durch die erhöhte Durchschiebekraft im Bereich der Neutralstellung bzw. im Falle des Geradeauslaufs liegt zugleich eine Lenkungsdämpfung bei Geradeauslauf vor. Auf diese Weise wird eine von der gelenkten Achse in die Lenkung eingeleitete Schwingung bevorzugt in der Geradeausstellung der Lenkung gedämpft. Dies ist besonders vorteilhaft bei Fahrwerksgeometrien, bei denen die Räder nur geringe Rückstellkräfte in Richtung des Geradeauslaufs ausüben und die deshalb eine geringe Eigendämpfung aufweisen.

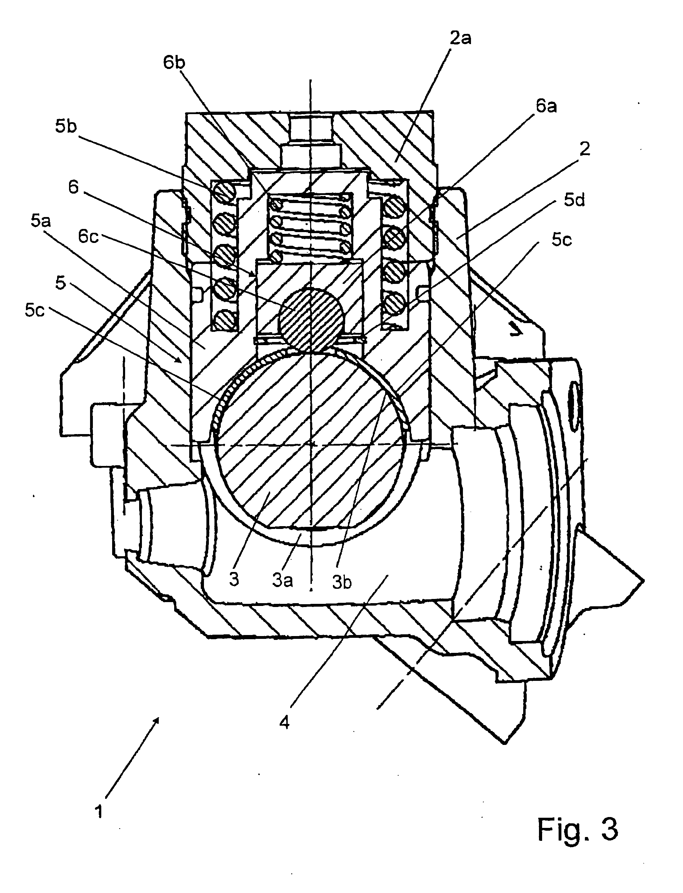

Während die vorliegende Erfindung am Beispiel einer Zahnstangenlenkung mit Y-förmiger Zahnstange beschrieben wurde, kann auch eine Zahnstange mit anderem, insbesondere rundem Querschnitt verwendet werden, wie dies in der Figur 3 veranschaulicht ist. Gleiche Bauelemente tragen hierbei gleiche Bezugsziffem.

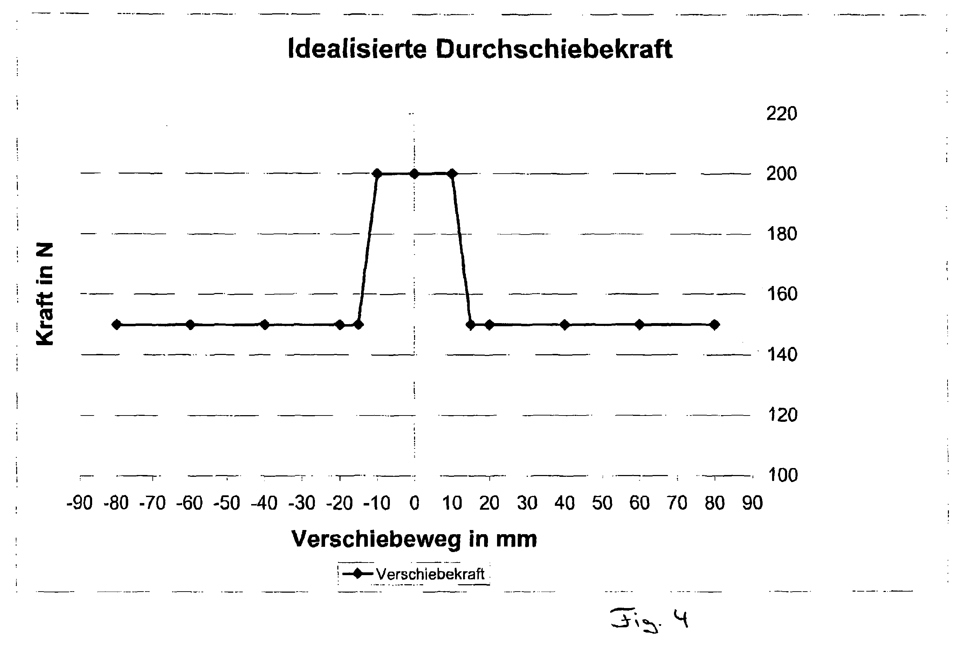

Die Figur 4 zeigt schließlich ein schematisches Diagramm mit dem Verlauf der Durchschiebekraft einer Lenkung nach dem oben beschriebenen Ausführungsbeispiel. Aufgetragen ist die Verschiebekraft über den Verschiebeweg, wobei die Geradeausstellung in der Mitte liegt.

### BEZUGSZEICHENLISTE

- 1: Lenkgetriebe
- 2: Lenkgehäuse
- 2a: Schlussstück
- 3: Zahnstange
- 3a: Zähne
- 3b: erste Stützfläche der Zahnstange
- 3c: zweite Stützfläche der Zahnstange
- 3d: Vertiefung in der zweiten Stützfläche
- 4: Lenkritzel
- 5: erstes Druckstück
- 5a: Druckstückkörper
- 5b: erste Feder
- 5c: erstes Stützmittel
- 5d: Anschlag
- 6: zweites Druckstück
- 6a: Druckstückkörper
- 6b: zweite Feder
- 6c: zweites Stützmittel

## Patentansprüche

1. Lenkgetriebe (1) für ein Kraftfahrzeug, umfassend
ein Lenkgehäuse (2),
eine in dem Lenkgehäuse (2) um einen Lenkweg verschiebbar geführte Zahnstange (3),
ein drehbares und mit der Zahnstange (3) kämmendes Lenkritzel (4), sowie
ein erstes Druckstück (5), wobei die Zahnstange (3) mittels des ersten Druckstücks (5) mit einer Kraft in Richtung des Lenkritzels (4) beaufschlagbar
ist,
**dadurch gekennzeichnet,**
**dass** die Zahnstange (3) zumindest über einen Abschnitt des Lenkweges mittels eines zweiten Druckstücks (6) mit einer Kraft in Richtung des Lenkritzels (4) beaufschlagbar ist.

2. Lenkgetriebe (1) nach Anspruch 1, **dadurch gekennzeichnet, dass** das erste Druckstück (5) über ein erstes Stützmittel (5c) an der Zahnstange (3) angreift und dass das zweite Druckstück (6) über ein zweites Stützmittel (6c) an der Zahnstange (3) angreift.

3. Lenkgetriebe (1) nach Anspruch 2, **dadurch gekennzeichnet, dass** das erste Stützmittel (5c) mit einer zu der Kraftrichtung des ersten Druckstücks (5) nicht senkrechten Stützfläche (3b) der Zahnstange (3) zusammenwirkt.

4. Lenkgetriebe (1) nach Anspruch 2 oder 3, **dadurch gekennzeichnet, dass** die Zahnstange (3) eine Ausformung (3d) aufweist, wobei das zweite Stützmittel (6) insbesondere in einem einer Neutralstellung der Zahnstange (3) zugeordneten Verschiebebereich mit der Ausformung (3d) zusammenwirkt.

5. Lenkgetriebe (1) nach Anspruch 4, **dadurch gekennzeichnet, dass** die Ausformung (3d) als Vertiefung einer dem zweiten Stützmittel (6) zugeordneten Stützfläche (3c) der Zahnstange (3) ausgebildet ist.

6. Lenkgetriebe (1) nach einem der Ansprüche 2 bis 5, **dadurch gekennzeichnet, dass** das zweite Druckstück (6) an dem ersten Druckstück (5) aufgenommen ist.

7. Lenkgetriebe (1) nach Anspruch 6, **dadurch gekennzeichnet, dass** das erste Druckstück (5) mittels einer ersten Feder (5b) gegen das Lenkgehäuse (2) abgestützt ist und dass das zweite Druckstück (6) über eine zweite Feder (6b) gegen das erste Druckstück (5) abgestützt ist.

8. Lenkgetriebe (1) nach einem der Ansprüche 2 bis 7, **dadurch gekennzeichnet, dass** das erste Stützmittel (5c) aus einem Polymer besteht.

9. Lenkgetriebe (1) nach einem der Ansprüche 2 bis 8, **dadurch gekennzeichnet, dass** das zweite Stützmittel (6c) als metallisches, drehbares Lagermittel ausgebildet ist.

10. Lenkgetriebe nach einem der Ansprüche 1 bis 9, **dadurch gekennzeichnet, dass** eine Durchschiebekraft der Zahnstange (3) in ihrer Längsrichtung im Bereich einer der Geradeausfahrt entsprechenden Neutralstellung der Zahnstange (3) größer ist als in einer von der Neutralstellung entfernt liegenden Stellung.
